# EUROPEAN PATENT APPLICATION

(11) **EP 4 679 284 A1**
(43) Date of publication of application: **14.01.2026**
(21) Application number: 25185344.6
(22) Date of filing: 25.06.2025
(51) Int. Cl.: G06F 16/2453, G06F 9/50, G06F 11/34

(54) **MANAGING QUERY EXECUTION AGAINST ONTOLOGY-BASED DATABASES IN A MULTI-USER ENVIRONMENT**

(30) Priority: 10.07.2024 US 202463669643 P
(71) Applicant: Palantir Technologies Inc., Denver, CO 80202 (US)
(72) Inventor: BAKER, James, Denver, 80202 (US); FALCO, Xavier, Denver, 80202 (US); SOUZA, Samuel Flavio Barroso, Denver, 80202 (US); MALLAH, Amr Al, Denver, 80202 (US); XU, Yixun, Denver, 80202 (US); BOGOMOLOV, Arseny, Denver, 80202 (US)
(74) Representative: Sayer, Robert David

(57) **Abstract**

A system for balancing query execution against ontology-based databases among multiple user accounts and related methods are disclosed. The system is programmed to receive database queries transformed from ontology queries from user accounts. The system is further programmed to manage execution of the database queries to enable fair utilization of computing resources among the user accounts, based on tracked usage of computing resources of each user account or estimated costs of pending database queries considering access controls associated with the ontology. Managing execution of the database queries comprises preempting a complex database query for another database query associated with a user account having a current top priority in query execution.

## Description

### TECHNICAL FIELD

The present disclosure relates to ontology-based database operations, and more particularly to database operations related to querying and access control.

### BACKGROUND

Data originating from data sources can be organized and structured according to an ontology, which facilitates understanding of and access to the data. The ontology can be backed by databases where the data is stored. It would be helpful to properly manage the databases while fully supporting operations of the ontology.

### SUMMARY

The appended claims may serve as a summary of the invention.

### BRIEF DESCRIPTION OF THE DRAWINGS:

Example embodiments will now be described by way of non-limiting examples with reference to the accompanying drawings, in which:
FIG. 1 illustrates an example networked computer system in which various embodiments may be practiced;
FIG. 2 illustrates an example set of components of and workflows managed by a computer application server ("server").
FIG. 3 illustrates an example graphical user interface for creating a granular policy.
FIG. 4 illustrates examples calls to an application programming interface (API) for querying an ontology.
FIG. 5 illustrates an example process of handling a set of database queries for execution.
FIG. 6 illustrates a process of managing execution of database queries associated with a plurality of user accounts in accordance with disclosed embodiments.
FIG. 7 illustrates a computer system upon which various embodiments may be implemented.

### DETAILED DESCRIPTION OF CERTAIN EMBODIMENTS

In the following description, for the purposes of explanation, numerous specific details are set forth in order to provide a thorough understanding of the example embodiment(s) of the present invention. It will be apparent, however, that the example embodiment(s) may be practiced without these specific details. In other instances, well-known structures and devices are shown in block diagram form in order to avoid unnecessarily obscuring the example embodiment(s).

### 1. GENERAL OVERVIEW

A system for balancing query execution against ontology-based databases among multiple user accounts and related methods are disclosed. The system is programmed to receive database queries transformed from ontology queries from user accounts. The system is further programmed to manage execution of the database queries to enable fair utilization of computing resources among the user accounts, based on tracked usage of computing resources of each user account or estimated costs of pending database queries considering access controls associated with the ontology. Managing execution of the database queries comprises preempting a complex database query for another database query associated with a user account having a current top priority in query execution.

In some embodiments, the system is programmed to manage the ontology, which includes definitions of ontology entity types, and ontology entities that are instantiated from the ontology entity types. An ontology entity type is generally an object type or a link type and has one or more properties. For example, an ontology object type can correspond to a person and has properties corresponding to a person's residence and occupation, and an ontology link type can correspond to a relationship between two people.

In some embodiments, the system is programmed to represent each ontology entity type and thus each ontology entity of the ontology entity type in multiple forms respectively in multiple databases having different capabilities. As one example, a first database can be a relational database that is particularly suitable for exploring properties of ontology entities, while a second database can be a graph database that is especially suited for exploring relationships between ontology entities. As another example, a third database can represent certain properties in a compressed or encrypted form that is not suitable for querying, while a fourth database can include an index for a certain combination of properties that facilitate specific access to the combination of properties.

In some embodiments, the system is programmed to receive an ontology query against the ontology from a user account. A first example is finding the top three colors for cars in New York, which involves computing maximums over ontology entities. A second example is finding names of family members of passengers of a flight that arrived in New York, which involves combining data from different ontology entity types. The system can be programmed to select one or more databases where the ontology entity types covered by the ontology query are represented. In the second example above, the ontology entity types covered by the ontology query can be the person object type, family link type, passenger link type, and flight object type. Therefore, the system can be configured to find one or more databases that represent these ontology entity types and allow efficient processing of ontology entities of these ontology entity types. Each of the one or more databases can be selected because it represents a large number of the relevant ontology entity types, or enables fast access of relevant properties of these ontology entity types, for instance. The system can then be further programmed to transform the ontology query into database queries based on transformations between definitions for these ontology entity types and schemas for the one or more databases.

In some embodiments, the system is programmed to manage execution of database queries submitted by different user accounts. To help achieve fairness in utilizing computing resources for query execution, the system can be programmed to set up permits for utilizing the computing resources and distribute the permits among the user accounts. For example, for a compute node having three cores, three permits can be established respectively for the three cores.

In some embodiments, when a first set of database queries is received from a first user account, the system is programmed to determine whether and how to process the first set of database queries based on various factors, such as the availability of computing resources for query execution, the availability for unused permits for the first user account, or the complexity of the first set of database queries. When computing resources for executing the first set of database queries are available, the system is programmed to execute the first set of database queries. For the execution, the system is programmed to create an execution plan for the first set of database queries, which includes breakpoints that enable executing a portion of the first set of database queries each time and facilitate preemption of the first set of database queries. For example, the system can be programmed to create a hierarchy of breakpoints and dynamically determine which granularity of the hierarchy to utilize for preemption depending on the current demand for computing resources. When computing resources for executing the first set of database queries are not available but unused permits remain available for the first user account, the system can be programmed to preempt one or more sets of database queries to execute the first set of database queries. Otherwise, the system can be programmed to enter the first set of database queries into a queue for the first user account for later execution.

In some embodiments, when execution of a second set of database queries received from a second user account is paused upon reaching a breakpoint or terminated, thereby freeing up one or more computing resources, the system is programmed to determine what to execute next using computing resources. For the determination, the system is programmed to compute a current priority for each user account based on an intensity of query execution for the user account, the availability for unused permits for the user account, or the complexity of a pending set of database queries submitted by the user account. For example, the intensity of query execution can be calculated as the number of computing resources utilized or the number of sets of database queries executed or submitted over a period of time. The complexity of a set of database queries can be calculated as an estimated number of database operations considering the set of permissions associated with the ontology that is applicable to the user account. The system is programmed to then identify the user account with the highest current priority. When the identified user account is not the second user account, the system is programmed to enter the second set of database queries together with the current state of execution into a queue for the second user account, and execute a pending set of database queries submitted by the identified user account. When execution of any set of database queries is complete, the system is programmed to transmit the result to the user account that submitted the set of database queries.

The system disclosed herein has several technical benefits. An ontology provides a structure to any large volume of data, which facilitates user interaction with the data. By providing a unified interface for querying the ontology, the system allows a focus on the ontology without requiring knowledge of how ontology data is represented or where the ontology is stored. By automatically selecting appropriate databases for executing database queries derived from an ontology query, the system achieves improved performance from utilizing the most appropriate capabilities to serve the ontology query. By tracking utilization of computing resources and preempting database queries, the system helps raise minimum throughput of query execution among user accounts. By preempting database queries while managing the state of query execution, the system enables efficient query execution without re-execution.

### 2. EXAMPLE COMPUTING ENVIRONMENTS

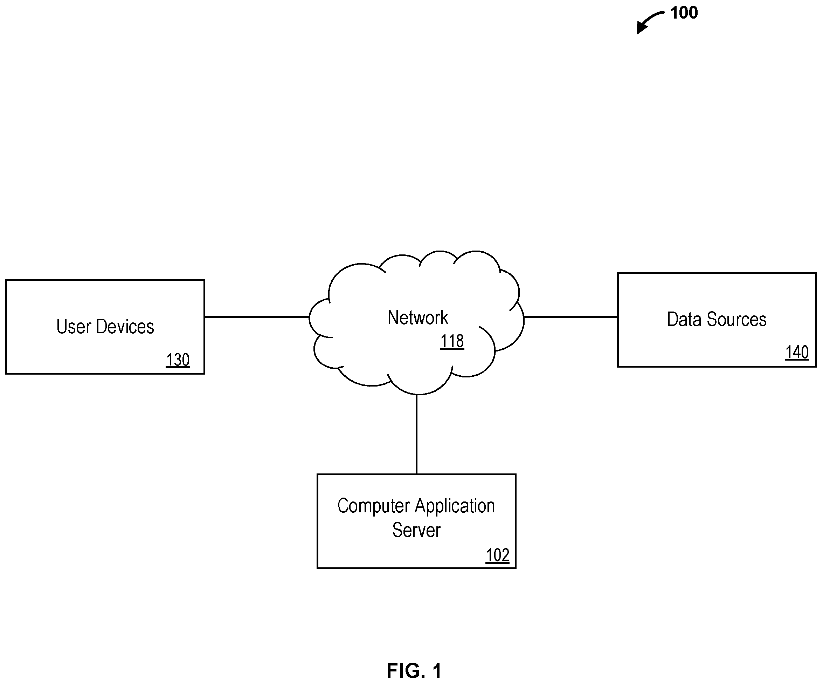

FIG. 1 illustrates an example networked computer system in which various embodiments may be practiced. FIG. 1 is shown in simplified, schematic format for purposes of illustrating a clear example and other embodiments may include more, fewer, or different elements.

In some embodiments, a networked computer system 100 comprises a computer server ("server") 102, one or more user devices 130, and one or more data sources 140, which are communicatively coupled through direct physical connections or via a network 118.

In some embodiments, the server 102 is programmed or configured to manage datasets representing data sources, which are transformed to ontology data, and databases representing the ontology data in multiple forms. The management comprises integrating multiple sources of change to the ontology data, representing changes to the ontology data in different forms, and allow access to the ontology data in various granularities. The server 102 can comprise any centralized or distributed computing facility with sufficient computing power in data processing, data storage, and network communication for performing the above-mentioned functions.

In some embodiments, each user device of the one or more user devices 130 is programmed to submit access requests to the server 102 to access the ontology and receive replies to the access requests from the server 102. The access requests can include reading, writing, adding, or deleting ontology data. Each user device can comprise a personal computing device, such as s desktop computer, laptop computer, tablet computer, smartphone, or wearable device.

In some embodiments, each data source of the one or more data sources 140 is programmed to provide original data to the server 102, which represents the original data as datasets, or accept changes to the original data based on updates to the datasets from the server 102. Each data source can generally be similar to the server 102 and comprise any computing facility with sufficient computing power in data processing, data storage, and network communication for performing the above-mentioned functions.

The network 118 may be implemented by any medium or mechanism that provides for the exchange of data between the various elements of FIG. 1. Examples of the network 118 include, without limitation, one or more of a cellular network, communicatively coupled with a data connection to the computing devices over a cellular antenna, a near-field communication (NFC) network, a Local Area Network (LAN), a Wide Area Network (WAN), or the Internet, a terrestrial or satellite link.

In some embodiments, the server 102 is programmed or configured to receive original data from the one or more data sources 140. The server 102 is programmed to set up datasets representing the one or more data sources 140 and transforming data in the datasets to ontology data. The server 102 is programmed to further represent the ontology data in multiple databases. On the other hand, the server 102 is programmed to receive access requests from the one or more user devices 130, including user edits to the ontology data. The server 102 is programmed to also integrate these user edits into the multiple databases. The server 102 can also be programmed to materialize these user edits into datasets and transform data in these datasets for integrating into the datasets representing the one or more data sources 140 and ultimately updating the one or more data sources 140.

### 3. FUNCTIONAL DESCRIPTIONS

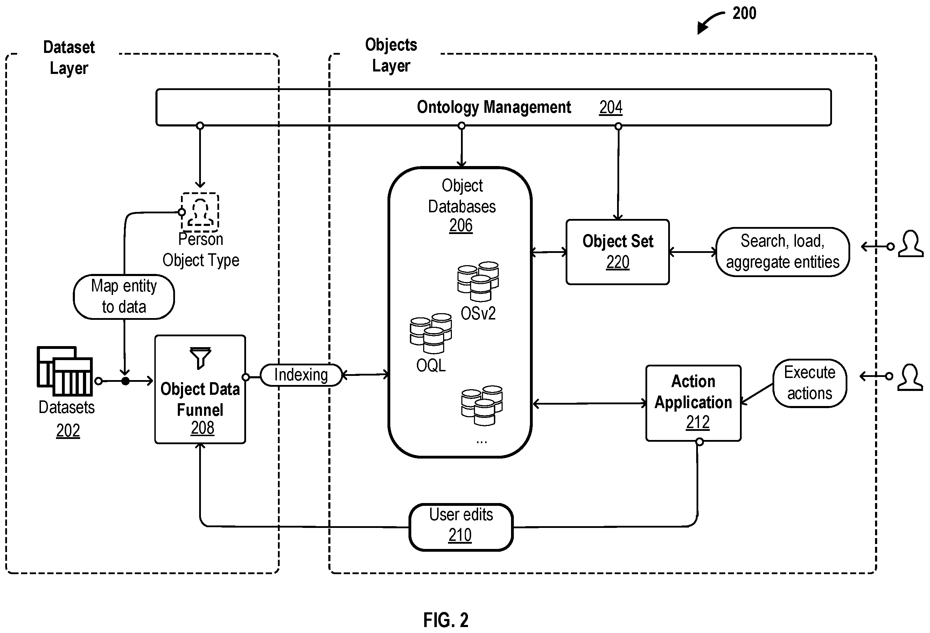

FIG. 2 illustrates an example set of components of and workflows managed by the server 102. In some embodiments, the server 102 is programmed to receive original data from various data sources and maintain them as datasets 202. The data sources can include file systems, database management systems, streaming sources, or blob stores, for example. A dataset is a wrapper around a collection of files which are stored in a specific file system. The datasets 202 can contain mainly structured and semi-structured data, from which one or more schemas can be inferred. Each schema specifies how a file is to be parsed into a specific format, such as a tabular format having rows and columns.

In some embodiments, the server 102 is programed to establish a mapping between the group of datasets and an ontology via the ontology management 204 as a service. The ontology includes definitions for all relevant object types, such as people, computers, networks, documents, or events, with objects being instantiated from the object types. The ontology can also separately include definitions for all relevant link types, such as similarities or dependencies, with links being instantiated from the link types. Specific structures, such as properties or versions, and specific operations, such as revision, access control, or provenance tracking at the object, link, or property level (or corresponding row or column level) apply to all object types and all link types. The object types and link types are considered as "ontology entity types". The objects and the links are considered as "ontology entities", which encompass the properties. The ontology and relevant metadata are considered as "ontology data". The ontology management 204 can manage definitions for an API that allows access to the ontology entities and the structures. The mapping between the group of datasets and the ontology would associate, for each dataset, one or more ontology entity types to which the dataset can be transformed. The server 102 can be further programmed to establish, for each dataset, a transformation between a schema for the dataset and definitions for the one or more ontology entity types to which the dataset is associated. For example, a column in the schema can be transformed to a property of an object type and vice versa. When more original data is received from the various data sources and maintained as updated datasets, any updates in the updated datasets can be readily converted to ontology data according to the transformation.

In some embodiments, the server 102 is programmed to store representations of ontology entity types and thus ontology entities in one or more ontology databases 206 (also called "object databases") via an ontology data funnel 208 (also called "object data funnel") as a service. The object data funnel 208 implements an indexing process of making the datasets as transformed to corresponding ontology data available in the object databases 206 for fast retrieval in response to user queries. The fast retrieval is achieved by the organization of the ontology, the representation of the ontology data in multiple object databases having different capabilities, and the availability of indices of ontology data and a mapping between the ontology and the object databases 206.

As links connect objects, link information could be considered as part of an object and vice versa. Therefore, representation of link types and that of object types can affect each other. In some embodiments, the server 102 is programmed to represent an object type or link type in different ways in different object databases in accordance with the different capabilities of the different object databases. As one example, in a relational object database, an object may be represented as a row while a property of an object may be represented as a column, which enables fast identification of objects that have certain property values. As another example, in a graph object database, an object may be represented as a node and a link between two objects may be represented as an edge, which enables fast exploration of relationships or links among objects. In other examples, the object databases can specialize in representing a property in a compressed form or an encrypted form, or representing properties in a specific order to form an index.

In some embodiments, the server 102 can be programed to establish the mapping between the object databases and the ontology also via the ontology management 204. This mapping would associate, for each ontology entity type, one or more object databases to which the ontology entity type can be transformed. The server 102 can be further programmed to establish, for each ontology entity type, a transformation between a definition for the ontology entity type and one or more schemas for the one or more object databases to which the ontology entity type is associated. For example, a property of an object type can be transformed to a column in a schema and vice versa. Subsequently, any changes to the ontology can be readily converted to changes in the object databases 206 according to this transformation.

In some embodiments, the server 102 is programmed to represent each ontology entity type in at least one of the object databases 206, with the one being considered as the canonical object database for the ontology entity type. The server 102 can be programmed to also represent the ontology entity type in one or more secondary object databases. As changes are made to the ontology data, the indices could be updated as part of the indexing process implemented by the object data funnel 208. In addition, the server 102 can be programmed to represent each ontology entity in different versions in the object databases 206 and preserve versioning consistency across the object databases 206. The availability of a particular version in the canonical object database can be used to determine whether a particular version of an ontology entity is to be served in response to user queries.

In some embodiments, the server 102 is programmed to manage not only objects or links including components originating from only one data source but also objects including components originating from multiple data sources. Each ontology entity that originates from multiple data sources is referred to as a multi-data source ontology entity ("MDO"). An MDO typically has these components that correspond to respective data sources and are separately represented in the object databases 206. For example, separate components could be stored as separate columns in an object database. The server 102 can be further programmed to control access to the ontology data, from the ontology level down to the component level. Such access control can be extended to the object databases 206 where the ontology data are represented.

In some embodiments, the server 102 is programmed to receive queries from a user device associated with a user account and execute the query via the ontology set 220 (also called "object set") as a service. The object set 220 can support the API for querying the ontology noted above. The API would include a set of functions that operate on ontology entity types or ontology properties, such as filters or aggregators. These functions generally correspond to read requests to view ontology data, which require read access to the object databases 206. These functions can also be called to process ontology data before actions are applied, as discussed below. The actions correspond to write requests to modify ontology data, which require write access to the object databases 206.

In some embodiments, the server 102 is programmed to receive an action comprising user edits 210 to ontology data from a user device, and apply the action via the action application 212 as a service. In this ontology context, an action specifies user logic to change data related to one or more ontology entities and is to be performed as a single transaction. In other embodiments, the server 102 is programmed to receive updates to the datasets 202 from the data sources. As noted above, when such updates are received, they can be readily converted to corresponding changes to the ontology data according to the transformation.

In some embodiments, the server 102 is programmed to store representations of ontology data in the object databases 206 via the object data funnel 208, as discussed above. The object data funnel 208 can implement the indexing process by indexing only changes and sending the indexed changes to the object databases 206. As the changes can originate from the user edits 210 or data source updates (that turn into dataset updates), the server 102 can be programmed to resolve any conflicts in the received changes before indexing the changes and sending the indexed changes via the object data funnel 208 to the object databases 206.

### 3.1. CONTROLLING ONTOLOGY DATA PERMISSIONS

As discussed above, an ontology has objects and links, and each object or link has properties. In addition, each MDO has multiple components corresponding to multiple data sources, where each component includes properties that come from a single one of the multiple data sources. In certain embodiments, different components of an MDO include different properties, thus allowing no duplicity within the object.

In some embodiments, the server 102 is programmed to control access to the ontology at different levels, such as the ontology level, link type level, link level, object type level, object level, component level, or property level. The access control can be defined with respect to a hierarchy of user roles and a set of permissions or access levels.

In some embodiments, the server 102 is programmed to associate each data source with a set of user roles for users or user accounts and corresponding permissions. For example, an ontology owner role has full access including being able to manage permissions, an ontology editor role is less than the owner role by not being able to manage permissions, an ontology viewer role is less than the editor role by not having editing permissions, and an ontology discoverer role is less than the viewer role by only being to see select metadata. In general, each data source leads to a distinct set of object types and link types, and the access control of the data source can determine the access control of the distinct set of object types and link types. In the case of MDOs, multiple data sources lead to an ontology entity type, and the access controls of the data sources can determine the access controls of the multiple components of the ontology entity type. When MDOs are represented in the object databases, such as one with rows and columns, the access controls of the multiple components of each ontology entity type would correspond to column-level access controls.

In some embodiments, the server 102 is programmed to require having permissions to view an entire ontology entity to be able to modify the ontology entity. Therefore, when a user account is granted access by a first data source but not a second data source, the user account would not have access to modify an MDO that originates from both the first data source and the second data source.

In some embodiments, the server 102 is programmed to require permissions as follows for accessing objects of an object type, all properties of which originate from two data sources of D1 and D2. Creating an object of the object type by setting values for the properties that originate from D1 requires only permissions for viewing D1. The values for the properties that originate from D2 could be set to null. Similarly, modifying an object of the object type by setting values for the properties that originate from D1 requires only permissions for viewing D1. Deleting an object of the object type, however, requires permissions for viewing both D1 and D2.

In some embodiments, the server is programmed to require permissions as follows for accessing links of a link type that connects two object types. The first object type has all properties originating from D1, and the second object type has all properties originating from D2. Creating or deleting a link of the link type between a first object of the first object type and a second object of the second object type requires only permissions for viewing the first object and the second object.

In some embodiments, the server 102 is programmed to manage granular policies. With each data source leads to a distinct set of object types and link types, the access control of the data source can apply at not only these levels but also the object level, link level, object property level, or link property level with granular policies. A certain granular policy can restrict access to certain ontology entities to certain user accounts based on certain attribute values of the certain user accounts or certain properties of the certain ontology entities. As a result, only those user accounts having the certain attribute values and those ontology entities having the certain property values would meet the requirements of the certain granular policy, and only the certain user accounts would have access to the certain ontology entities or the certain properties of the certain ontology entities. For example, the certain granular policy can allow user accounts from Europe to see and edit European objects. When ontology entities are represented in the object databases, such as one with rows and columns, the access controls that apply at the ontology entity level would correspond to row-level access controls, and those that apply at the property level would correspond to column-level access controls.

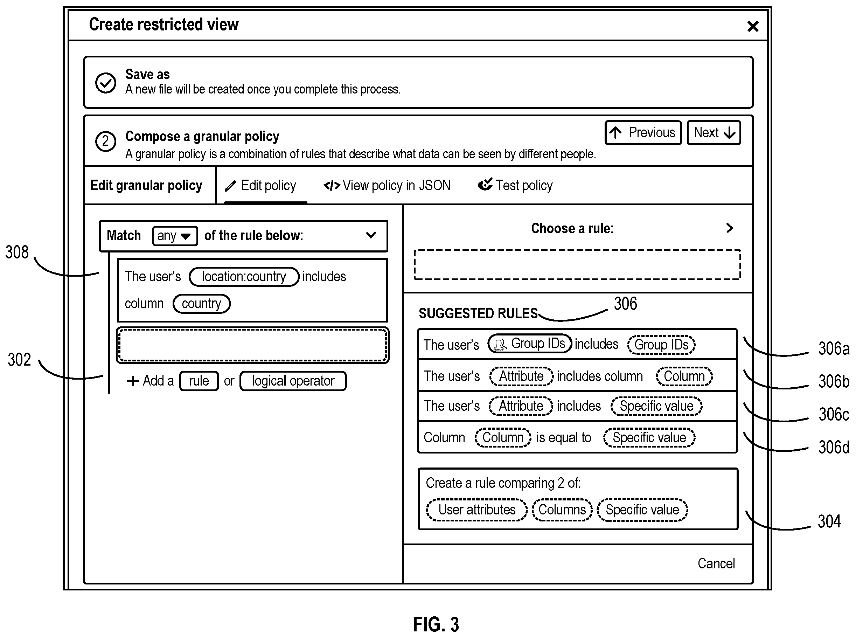

FIG. 3 illustrates an example graphical user interface for creating a granular policy. In some embodiments, a granular policy can comprise one or more rules combined by logical operators. An administrator, such as a user in the ontology owner role, can add a rule or logical operator using the buttons in the area 302. For adding a rule, an initial mechanism of choosing two of three items for comparison can be employed in the area 304, and some sample comparisons are listed in the area 306. The initial mechanism allows three types of comparisons. The first type of comparison compares an attribute of a user account ("user attribute") with a specific value, and the rule 306c is an example. The second type of comparison compares a property of an ontology entity ("ontology entity property" corresponding to a column) with a specific value, and the rule 306d is an example. The third type of comparison compares a user attribute with an ontology entity property, and the rule 306a and the rule 306b are examples. The administrator can choose two of the three items in the area 304, specify a relational operator, such as "includes" or "is equal to", and obtain an initial rule, such as the rule 306b. The user can then instantiate each of the items, such as assigning "Group IDs" to the attribute item and "Group IDs" to the column item of the rule 306b, to get the final rule, such as the rule 306a, which indicates that the Group IDs user attribute includes a value that is not manually specified but comes from the "Group IDs ontology entity property.

In some embodiments, a final rule can then be displayed in the area 308, and it can be combined with existing rules using one or more logical operators, such as "any". The default access scope for a specific user in an appropriate user role when a rule is satisfied can be the objects that are compared in the rule or all objects otherwise. For example, the default access scope for the specific user from satisfying the rule 306a can be all objects where the Group IDs property match the Group IDs attribute of the specific user. The default access scope for the specific user from satisfying the rule 306c can be all objects. The default access scope for the specific user from satisfying the rule 306d can be all objects where the specified ontology entity property is equal to the specified value. The default access scope for satisfying a combination of rules can be the intersection of the access scopes of the matched rules. Additional elements can be included in the area 302, the area 304, or another area in the graphical user interface for specifying the access scope when each rule or the combination of rules is satisfied, which can be limited to specific properties of the objects. For example, a certain access scope can be defined to exclude from access those object properties that are being compared in the rules and the values thereof for users in roles that have editing permissions, to reduce disruptions to the application of the rules.

As discussed above, in some embodiments, the granular polices are applied on a per data source basis. The access controls associated with data sources can take precedence over those based on granular policies. For example, an object type might have two properties A and B that come from different data sources. For a specific user, the access controls associated with the data sources can determine that the ontology entity property B is inaccessible. When relevant granular policies are applied, only the ontology entity property A is then available for comparison, and the application result can be that only the ontology entity property A of certain objects are accessible. The presentation of the application result can depend on the exact user roles and permissions. When an ontology entity property is accessible, it can mean that only the metadata of the ontology entity property (e.g., identifier) is accessible, or both the metadata and actual value are accessible. Therefore, in the example, the metadata of the ontology entity property A would be shown and the value of this ontology entity property would be shown for the certain objects to the specific user. On the other hand, the metadata of the ontology entity property B can be shown with no value shown, or alternatively no information regarding the ontology entity property B would be shown depending on the user role of the specific user.

### 3.2. PROVIDING A UNIFIED ONTOLOGY QUERY INTERFACE ACROSS MULTIPLE OBJECT DATABASES

In some embodiments, the server 102 is programmed to support an API for querying an ontology. The API includes a group of functions, such as filters or aggregators, which are typically predicated on ontology entity properties. Different properties can support the same function. Certain functions apply to specific property types, such as a string or a number, and thus all properties of that property type across ontology entity types. Some functions apply to specific ontology entity types and thus additional ontology entity types that derive from the specific ontology entity types. The applicability of each function or other relevant information regarding the function can be recorded as metadata of the function. The API can enable the generation of an ontology entity set, such as an object set, through the use of filters. Each filter generally takes as an input a criterion to be satisfied by a property, thus filtering out those ontology entities having that property that does not satisfy the criterion. Each filter can also simply take a list of identifiers of ontology entities for retrieving the set of ontology entities identified by the list of identifiers. The API can also enable the generation of specific values through the use of aggregators. Each aggregator can be directly predicated on a property across all ontology entities or, after the property values are grouped into buckets, across all ontology entities in each bucket. Example aggregators include count(), average(), min(), or max(). Example grouping operators include topValues() to extract the top values of the property or by Year to group the property values by year.

As discussed above, each ontology entity type can be mapped to multiple object databases, where ontology entities of the ontology entity type are represented. Ontology entities of the ontology entity type can be represented in different ways in different object databases. As one example, in one object database, ontology data can be represented in an object-centric manner, while in another object database, links can also be represented as first-class citizens. As another example, in one object database, certain properties of the ontology entity type can be stored in a compressed form and thus generally unavailable for querying, while in another object database, some properties of the ontology entity type can all be stored as strings that are suitable for specific operations and thus can be operated on by specific functions.

In some embodiments, the server 102 is programmed to associate each object database with functional information that can be matched with metadata of the functions in the API for querying the ontology. As different functions can apply at different granularities, the functional information can be recorded at different granularities according to the mapping between ontology entity types and object databases. As one example, when an object database represents objects of an object type as rows and properties as columns, certain columns may be associated with functional information, which can be part of the column's metadata, such as that a column is of a specific data type, is compressed or otherwise not suitable for querying, or has corresponding indices. As another example, when an object database represents links of a link type as edges between nodes, the edges can be associated with functional information, which can be part of the edge's metadata, such as that an edge represents a link that can be directly queried.

In some embodiments, when a function is called, the server 102 is configured to determine which object databases to access to execute the function efficiently. The determination can depend on the ontology entity type on which the function is called, the nature of the function, or other factors, as further discussed below. The server 102 can be programmed to determine an ontology entity type on which the function operates or which the function takes as an input as part of the conventional process of executing a function. The server 102 can be programmed to further identify the set of object databases with which the ontology entity type is associated according to an existing mapping, and select at least one from the set of object databases to access.

In some embodiments, the server 102 can be programmed to perform the selection by matching the function's metadata with the functional information associated with the set of object databases, as discussed above and illustrated below. The server 102 can be programmed to perform the selection by further estimating the performance of the set of object databases in executing the function. The estimation can be performed by partially or selectively executing the function. For example, while the function is to obtain an aggregation over each of five groups, the estimation can be performed by obtaining an aggregation over one of the five groups. The server 102 can also be programmed to perform the selection according to a predetermined list of priorities assigned to the set of object databases. The assignment can be performed based on the number of properties the representation of which is suitable for querying in an object database, the number of properties that are indexed in an object database, the historical frequency of use for an object database, or other factors. In other embodiments, the server 102 can be programmed to perform the selection by considering multiple functions simultaneously. For example, an object database can serve multiple functions being called can be preferred to another object database that can serve only one of the functions being called based on reduced overhead associated with database access.

In some embodiments, upon selecting an object database, the server 102 is programmed to access the object database and retrieve a piece of data in executing the function based on the transformation from the definition for the ontology entity type on which the function is called to the schema for the object database. Depending on the nature of the function, the server 102 can be programmed to retrieve one or more pieces of data from one or more object databases in executing the function. The server 102 is further programmed to transform the combination of the one or more pieces of data back into ontology data in response to the function call. When the retrieval is unsuccessful, the server 102 can be programmed to re-select another object database from the set of object databases.

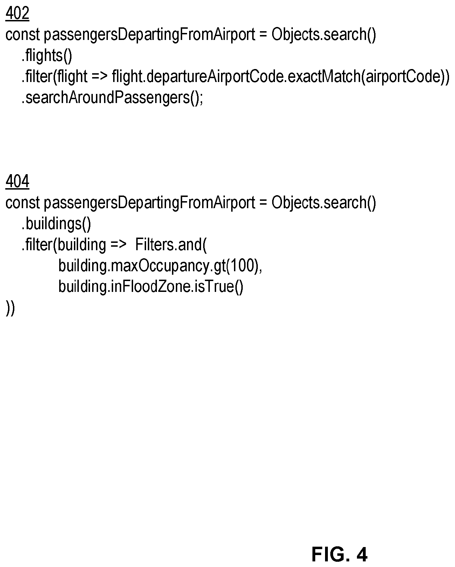

FIG. 4 illustrates examples calls to the API for querying an ontology. In the set of functions 402, the Objects.search() function in the API can be used to specify a query. The invocation of this function is followed by the invocation of a function that corresponds to an ontology entity type, such as a flight object type that corresponds to a flight, to specify the return type of the query. All ontology entity types can support the filter() function that implements a filter, which means that the filter() function can operate on all ontology entity types. The flight object type has a property of departureAirportCode, which corresponds to the departure airport code of a flight. All properties can support the exactMatch() function as one of the matching functions. The exactMatch() function thus operates on a property of an ontology entity and takes a value or anther property as an input. Therefore, in the set of functions 402, the filter() function is requesting the set of flight objects, where the departureAirportCode has a value of airportCode, to look for the set of flights that depart from the airport having an airport code of airportCode. The searchAround functionality enables traversing links, and a corresponding function can be created for each link type. A flight object type can be linked to a passenger object type that corresponds to a passenger of the flight. The searchAroundPassengers() function thus operates on an ontology entity type that has links to the passenger object type and, when invoked on a flight object, finds all the passenger objects linked to the flight object. Therefore, calls of the set of functions 402 returns the set of passenger objects that are linked to the set of flight objects returned by the filter() function, that correspond to the set of passengers of these flights.

In some embodiments, to execute the set of functions 402, the server 102 is programmed to first identify the set of flight objects that satisfy the filter criterion and then identify the set of passenger objects that are linked to the set of flight objects. For the first identification, the exactMatch() function operates on or takes as an input a property value. The server 102 can thus be programmed to determine an object database for the flight object type that enables fast retrieval based on a particular property value of an object. The server 102 can be further programmed to detect that a particular object database is a relational database that has an index on the column representing the departureAirportCode property and select the particular object database. For the second identification, the searchAround functionality operates on links. The server 102 can thus be programmed to determine an object database for the flight object type that allows efficient traversal of links connecting flight objects with passenger objects. The server 102 can be programmed to detect that a certain object database is a graph database that represents links between flight objects and passenger objects as edges and select the certain object database. Finally, in response to calls to the set of functions 402, the server 102 is configured to return the result of the second identification.

In the set of functions 404, the Objects.search() and filter() functions in the API to query the ontology have been discussed above. The building object type has a property of maxOccupancy, which corresponds to the maximum occupancy of the building, and a property of inFloodZone, which corresponds to an indication of whether the building is in a flood zone. The Filters.and() function in the API can be used to combine filters using the and logical operator, which takes two Boolean expressions as inputs. In this case, the first Boolean expression is building.maxOccupancy.gt(100) to indicate whether the building's maximum occupancy is greater than 100 people. The second Boolean expression is building.inFloodZone.isTrue(), which indicates whether the building is in a flood zone. Therefore, the set of functions 404 returns the set of building objects that are returned by the filter() function.

In some embodiments, to execute the set of functions 404, the server 102 is programmed to identify the set of building objects that satisfy the filter criterion, which is a combination of two filter criteria. The two filter criteria involve different functions, but both gt() and isTrue() operate on or take as an input a property value. The two filter criteria can lead to access to different object databases even if they apply to the same building object type. In this case, the maxOccupancy property can be a property that is specific to the building object type or is commonly accessed, while the inFloodZone can be a property that is inherited from a related ontology entity type, such as a geoArea object type, and not commonly accessed. Furthermore, a first object database can store a subset of the properties of building objects that are commonly accessed in uncompressed form in hot storage and the remaining properties in archived form in cold storage. A second object database can be created to specifically serve geospatial queries and have specific indices for relevant properties, including the inFloodZone property of the building objects. The server 102 is thus programmed to detect that the maxOccupancy property can be efficiently queried in the first object database and select that object database to acquire a first set of building objects that satisfy the first filter criterion. The server 102 is programmed to then detect that the inFloodZone property can be efficiently queried in the second object database and select that object database to acquire a second set of building objects that satisfy the second filter criterion. Finally, in response to calls to the set of functions 404, the server 102 is configured to return the intersection of the first set of building objects and the second set of building objects.

In some embodiments, in executing a function call, the server 102 is programmed to consider data availability in an object database, which can vary depending on the versioning strategy. The function calls discussed herein would correspond to the read requests discussed above. Sometimes, the versioning strategy allows a latest version of an ontology entity of an ontology entity type to be accessed even when the latest version is not yet represented in all the object databases associated with the ontology entity type. The server 102 thus can be programmed to track the list of object databases where the latest version is available, which limits the choices of object databases in executing a function all.

In some embodiments, in executing a function call, the server 102 is programmed to also consider data access control in the ontology, which can vary depending on properties of ontology entities and attributes of user accounts, as discussed in Section 3.1. The server 102 is programmed to determine whether the user accounts instructing executing the function has permission to access each ontology entity on which the function operates, and such permission would generally apply to all the object databases associated with the corresponding ontology entity type. In certain embodiments, the functions themselves can be associated with access control, so permissions can be determined before a function is applied to any ontology entity type. For example, access to fuzzy filters that allow fuzzy matching could be granted to only user accounts that are associated with more than a certain amount of experience, regardless of which ontology entities are to be fuzzy matched. Among the set of user accounts that are allowed to use the fuzzy filters, granular security policies can then further determine which user accounts can have read or view access to the ontology entities being fuzzy matched. Generally, any portion of an ontology entity that is not accessible to a user account becomes a null value to the user account.

### 3.3. IMPROVING FAIRNESS IN QUERY EXECUTION

### 3.3.1. INITIAL PROCESSING OF ONTOLOGY QUERIES

In some embodiments, the server 102 is programmed to receive a query of an ontology from a user device, as discussed above. The ontology query can include one or more calls of functions in the API of the ontology. The server 102 is programmed to then plan the execution of the ontology query, starting with selecting an object database from one or more object databases for each ontology entity type covered by the ontology query. In certain embodiments, the server 102 can be programmed to minimize the total number of object databases selected for the ontology entity types covered by the ontology query. For a given object database, the server 102 can be programmed to then determine how the ontology query is translated to database queries or operations. The determination can be made based on the mapping between the ontology entity types and the plurality of object databases, including a transformation between the definition for an ontology entity type and the schemas for the corresponding object databases.

As discussed above, the API includes aggregators each directly predicated on a property of an ontology entity type across all ontology entities of the ontology entity type or, after the property values are grouped into buckets, across all ontology entities of the ontology entity type in each bucket. When the selected object database has tables of rows and columns, for example, such an aggregator (together with a related grouping function) can correspond to aggregating values in a column of a table. The API also includes functions that can be invoked on different ontology entity types, which when called together would lead the exploration of ontology entities of multiple ontology entity types. When the selected object database is the same for the multiple ontology entity types and has tables of rows and columns, for example, these functions can lead to joining two tables. The API also includes the searchAround functionality, which leads to various functions specific to respective ontology entity types, that enables traversing links between objects. When the selected object database has tables of rows and columns, for example, such a searchAround-based function can also lead to joining two tables. For example, the searchAroundPassengers() function when invoked on a set of flight objects, can be used to find a relationship between the passenger objects linked to the set of flight objects and specific information of the set of flight objects, such as the arrival city. The function can thus lead to a join in the selected object database between a flight table representing all flight objects with the specific information of interest and a passenger table representing all passenger objects based on the flight identifier property.

In some embodiments, the server 102 is programmed to identify a set of permissions for a user account associated with the user device and execute the ontology query subject to the set of permissions. As discussed above, there can be granular security policies that determine which properties of each ontology entity can be accessed by the user account and what types of access are granted to the user account, based on attributes of the user account. The set of permissions can then affect whether and how specific database queries can be executed. For example, to execute an ontology query that calls the searchAroundPassengers() function on a set of flight objects can require that the user account be able to execute the ontology query or the searchAroundPassengers() function and view the portions of the selected object database that represent the flight objects and the passenger objects, such as the flight table and the passenger table or specific rows or columns therein.

In some embodiments, the server 102 is programmed to manage a distributed environment having a plurality of computing nodes (or search nodes). The plurality of search nodes is configured to handle database operations, such as storing or searching data in the object databases. Each search node can host portions of an object database. For example, the server 102 can be programmed to divide an object database into partitions and store data across these partitions in a manner that is agnostic to the nature of the data. Specifically, the server 102 can be programmed to perform database sharding by storing the object database across multiple search nodes of the distributed environment. Each partition is considered as a shard, and each node can host one or more shards. A piece of data to be stored in the object database can then be assigned to one of the shards using range-based sharding, hashed sharding, geo sharding, or other known methods. Each search node can also have one or more cores and be configured to perform a database query against one or more of the object databases, including the portions of the object databases hosted by the search node.

In some embodiments, the distributed environment includes a specific set of search nodes that is configured for performing efficient and scalable data processing ("power nodes"). For example, the specific set of power nodes can run APACHE SPARK, which is a distributed processing system that supports data parallelism and fault tolerance, uses in-memory caching, and optimizes query execution for fast analytic queries. The server 102 can thus be configured to execute complex database queries via the specific set of power nodes for improved performance instead of executing those database queries via a single node or other search nodes outside the specific set of power nodes.

In some embodiments, the server 102 is programmed to determine, when the ontology query leads to aggregations and joins, whether the execution will significantly benefit from the set of search nodes configured for performing efficient and scalable data processing. In response to a positive determination, the server 102 can be programmed to route complex database queries related to the aggregations or joins to the specific set of power nodes, which can be programmed to retrieve data from the object databases, perform appropriate data processing operations on the retrieved data, and return the results.

### 3.3.2. SETTING UP A SEARCH NODE FOR FAIR RESOURCE UTILIZATION

In some embodiments, the server 102 is programmed to identify a set of computing resources available for executing database queries on a search node of the distributed environment, and set up corresponding quota in terms of permits for utilizing the set of computing resources. The server 102 is further programmed to identify a set of user accounts which submit sets of database queries for execution, and assign the quota to the set of user accounts to help achieve fairness in utilization of the computing resources for query execution. In general, the server 102 can be programmed to organize the user accounts into a hierarchy. For example, the hierarchy could have one level above user accounts for enrollments (teams). Then, a first number of cores can be available on a search node, and a second number of enrollments can exist comprising a total of a third number of user accounts. The server 102 can be programmed to then associate one permit with each core and distribute the first number of permits equally to the second number of enrollments and ultimately to the third number of user accounts.

In some embodiments, the server 102 is programmed to maintain a queue to hold sets of database queries submitted for execution for each user account. The server 102 can be programmed to also classify each set of database queries into a hierarchy of query categories based on the type, complexity, or other attributes of the set of database queries and instead maintain a queue per user account and per query category. The quota assigned to each user account can be further distributed among the query categories under the user account.

### 3.3.3. RECEIVING A SET OF DATABASE QUERIES FOR EXECUTION

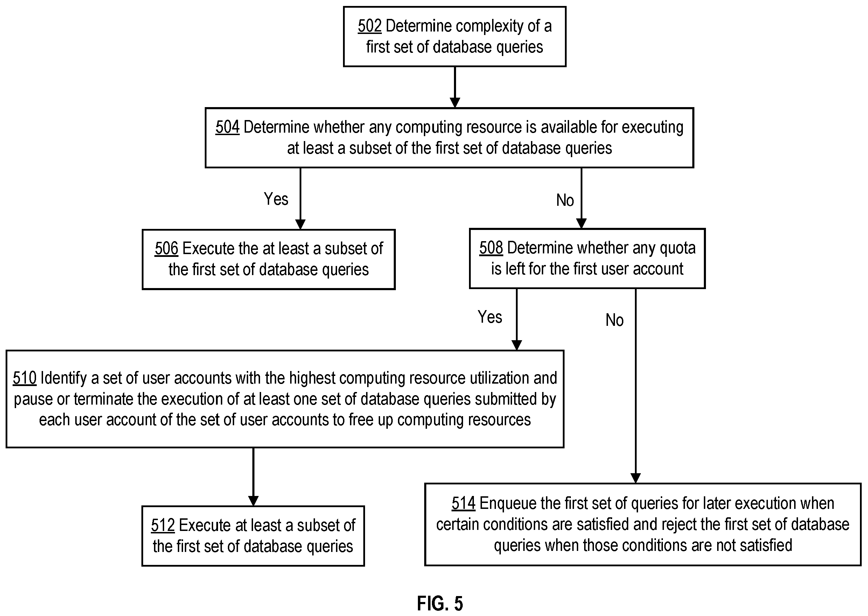

FIG. 5 illustrates an example process of handling a set of database queries for execution. In some embodiments, the server 102 is programmed to receive a first request to execute a first set of database queries from a first user device associated with a first user account. At step 502, the server 102 is programmed to estimate the complexity of the first set of database queries, as further discussed below. This step can be performed at a later time or when necessary. At step 504, the server 102 is programmed to determine whether any computing resource is available for executing at least a subset of the first set of database queries, as further discussed below. In response to determining that some computing resource is available, at step 506, the server 102 is programmed to execute the at least one subset of the first set of database queries.

In response to determining that no computing resource is available, at step 508, the server 102 is programmed to determine whether any quota is left for the first user account. In response to determining that some quota is left for the first user account, at step 510, the server 102 is programmed to identify a group of sets of database queries associated with user accounts having no remaining quota and having the highest intensities of query execution, as further discussed below, and pause or terminate the execution of these sets of database queries to free up enough computing resources to execute at least one subset of the first set of database queries. As discussed above, a hierarchy of user accounts can be maintained, and under each user account a hierarchy of query categories can be maintained. Steps 508 and 510 or any other step to preempt a set of database queries, as further discussed below, can be performed at any level of the hierarchy of user accounts or any level of the hierarchy of query categories to help achieve fairness in query execution at that level.

At step 512, the server 102 is programmed to then execute the at least one subset of the first set of database queries. In response to determining that no quota is left for the first user account, at step 514, the server 102 is programmed to enqueue the first set of queries for later execution when certain conditions are satisfied and reject the first set of database queries when those conditions are not satisfied. The certain conditions can include that the length of the queue is shorter than a first threshold or the frequency of submission for the first user account or for the queue is less than a second threshold. In other embodiments, instead of processing the received sets of database queries in the order of receipt, the server 102 can be programmed to evaluate a group of received sets of database queries at once and process them in a specific order, such as the order of complexity or remaining quota for the associated user accounts.

In some embodiments, the server 102 is programmed to estimate the complexity of the first set of database queries. The estimation can be based on the type of database query. For example, joins and aggregations often lead to a relatively high utilization of computing resources and thus can be deemed as complex database queries. The server 102 can be further programmed to estimate the cost of executing the first set of database queries as a measure of complexity based on sampling. For example, the search node can host partitions of the object databases, as discussed above. The server 102 can be programmed to select any partition of an object database as a representative sample population for the object database and estimate the cost of executing a database query against the object database by executing the database query against the sample population. The execution of any database query is subject to the relevant set of permissions defined in the ontology, as discussed above. The cost can be expressed in terms of the computing resources utilized, the time taken, or other measures.

In some embodiments, the server 102 is programmed to create an execution plan for the first set of database queries, where the execution plan is divided at predetermined breakpoints into a plurality of potions corresponding to a plurality of subsets of the first set of database queries. The server 102 can be programmed to select the breakpoints using existing techniques and insert breakpoints at the selected locations. In general, such a breakpoint location would be outside the scope of execution of any lowest-level query operator, and require a relatively low amount of state information to be preserved to resume execution from the location. The server 102 is programmed to then enable carrying out the plurality of portions of the execution plan sequentially but at non-consecutive times. The server 102 is programmed to carry out the portion of the execution plan before the next breakpoint or the end of the execution plan in each execution of at least a subset of the first set of database queries.

In some embodiments, the server 102 is programmed to set up an event detector and a corresponding event handler in implementing the execution plan. The event detector detects a preemption request to pause execution of the first set of database queries. The event handler identifies the next possible breakpoint, waits until that breakpoint is reached, and performs the same tasks performed when a predetermined breakpoint is reached, as further discussed below. Therefore, in the absence of or in addition to predetermined breakpoints, the server 102 can be programmed to dynamically generate a preemption request to pause execution of the first set of database queries at appropriate times. Examples of the appropriate times include when no computing resource is available, and when a set of database queries associated with a user account having remaining quota is waiting to be executed (e.g., step 510 in FIG. 5) or when execution time of the first set of database queries has exceeded a threshold and when all the quota is used up.

In some embodiments, the server 102 is programmed to compute the intensity of execution for the first user account as the inverse of the amount of time since the last time a set of database queries was executed for the first user account or as the inverse of the average amount of time each set of database queries stays in the queue for the first user account. The server 102 can also be programmed to compute the intensity of execution as the number of sets of database queries or as the volume of computing resources utilized by these sets of database queries that are executed for the first user account during a specific period of time. The server 102 can be additionally programmed to compute the intensity of execution as the amount of time all the quota for the first user account is used during a specific period of time.

### 3.3.4. COMPLETING EXECUTION OF A SUBSET OF DATABASE QUERIES

In some embodiments, once a breakpoint is reached in the execution plan for the first set of database queries, the server 102 is programmed to determine whether the first set of database queries is to be preempted by another set of database queries. In response to a positive determination, the server 102 is programmed to pause execution of the first set of database queries, save the current state of execution, enqueue the execution plan with the current state, and free up the computing resources used to execute the first set of database queries. In response to a negative determination, the server 102 is programmed to carry out the portion of the execution plan before the next breakpoint. The first set of database queries is to be preempted when the no computing resource is available and when another set of database queries is already outside a queue and ready to be executed (e.g., step 510 in FIG. 5) or is at the head of a queue and has a higher current priority than the first set of database queries.

In some embodiments, the server 102 is programmed to examine the sets of database queries at the head of the queues (without dequeuing them, thus maintaining their standing in the respective queues), and select the one having the highest current priority. In dynamically determining the current priority of each set of database queries, the server 102 can be programmed to consider an intensity of execution for the associated user account, the estimated complexity of at least the subset of the set of database queries to be executed next, or other factors. The server 102 can be configured to assign different weights to these factors, such as a negative weight that is relatively large in absolute value to significantly lower the current priorities for increasing intensities of execution and a negative weight that is relatively small in absolute value to slightly lower the current priorities for increasing estimated complexities. The server 102 can also be configured to compute current priorities from these factors using known machine learning techniques, such as a feedforward neural network. In selecting the set of database queries having the highest current priority, the server 102 can be programmed to traverse any hierarchy of user accounts or any further hierarchy of query categories from the top down to the desired level. Instead of directly comparing the current priorities of associated user accounts, the server 102 can be configured to initially compare the current priorities at the highest level of the hierarchies, select the node in the hierarchies having the highest aggregate current priority, and then repeat the process at each lower level, each time making a selection from the child nodes of the selected node at the higher level.

Considering the intensity of execution for an associated user account could increase the chance that the use of computing resources is equally distributed among all the user accounts. Considering the estimated complexity of a set of database queries could help increase the intensities of execution for multiple user accounts. For example, utilizing the freed-up computing resources to execute a larger number of less complex sets of database queries could lead to a higher throughput of query results than executing a smaller number of more complex sets of database queries. In some embodiments, the remaining quota is also considered as a factor in computing a current priority rather than considered separately, as noted above. The remaining quota can then be given the largest weight so that a set of database queries associated with a user account with remaining quota is to have a higher current priority than another set of database queries associated with another user account with no remaining quota.

In some embodiments, the server 102 is programmed to determine that the selected set of database queries has a higher current priority than the first set of database queries at the present time. In that case or when execution of the first set of database queries is completed, the server 102 is programmed to dequeue the selected set of database queries, and execute at least a subset of the selected set of database queries.

In some embodiments, in determining whether the first set of database queries is to be preempted, the server 102 is programmed to consider only those factors related to user accounts, such as an intensity of execution for a user account or an entity at a higher level of the hierarchy of user accounts. The server 102 can be programmed to then evaluate these factors without considering the sets of database queries at the top of the queues and select the entity having the highest current priority. The server 102 can be configured to similarly determine that the selected entity has a higher current priority than the entity associated with the first set of database queries at the present time. In that case or when execution of the first set of database queries is completed, the server 102 is programmed to dequeue a set of database queries from a queue corresponding to the selected entity, and execute at least a subset of that set of database queries.

In some embodiments, at the beginning and the end of executing at least a subset of a set of database queries, the server 102 is programmed to perform status updates. The server 102 can be programmed to update the availability status of a computing resource upon the seize (beginning of utilization) or release (end of utilization) of the computing resource. The server 102 is also programmed to update the remaining quota of a user account corresponding to the seize or release of computing resources. The remaining quota can be negative to account for overuse of computing resources. The update can include a timestamp for each seize and release of a computing resource and the change in the remaining quota, to enable computation of the intensity of utilization for each user account, as noted above.

### 4. EXAMPLE PROCESSES

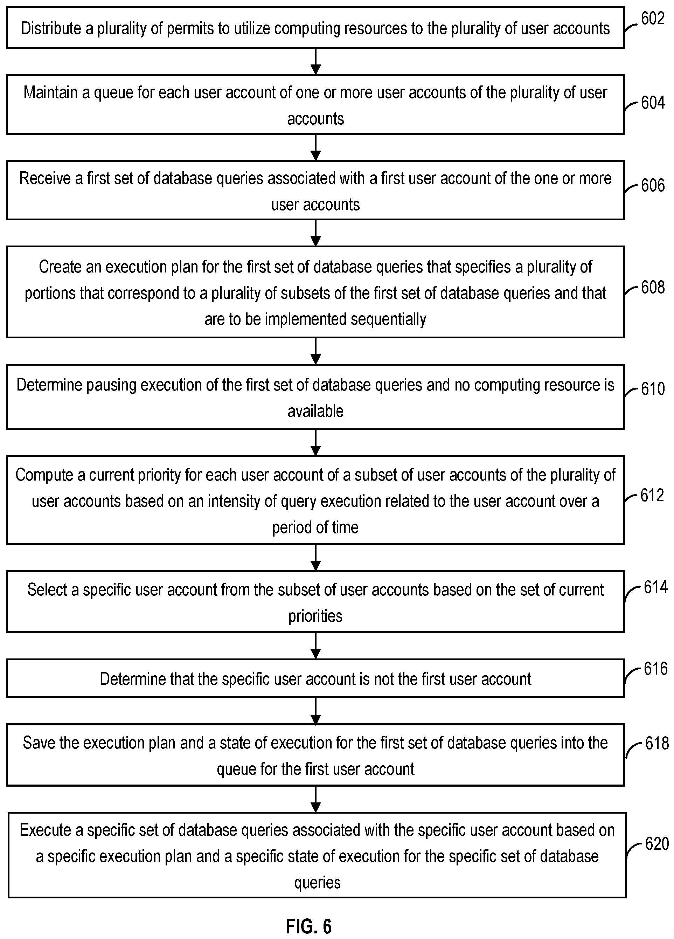

FIG. 6 illustrates a process of managing execution of database queries associated with a plurality of user accounts in accordance with disclosed embodiments. Each of FIGS. 5 and 6 is shown in simplified, schematic format for purposes of illustrating a clear example and other embodiments may include more, fewer, or different elements connected in various manners. Each of FIGS. 5 and 6 is intended to disclose an algorithm, plan, or outline that can be used to implement one or more computer programs or other software elements which when executed cause performing the functional improvements and technical advances that are described herein. Furthermore, the flow diagrams herein are described at the same level of detail that persons of ordinary skill in the art ordinarily use to communicate with one another about algorithms, plans, or specifications forming a basis of software programs that they plan to code or implement using their accumulated skill and knowledge.

In some embodiments, the server 102 is programmed to receive an ontology query for querying an ontology from the first user account. The ontology includes a definition for each ontology entity type of a plurality of ontology entity types and a plurality of ontology entities instantiated from the plurality of ontology entity types. Each ontology entity type of the plurality of ontology entity types has one or more properties. The server 102 is programmed to then identify a set of permissions for accessing the ontology associated with the first user account, and transform the ontology query to the first set of database queries. In addition, the server is programmed to cause the execution of the first set of database queries based on the set of permissions.

In step 602, the server 102 is programmed or configured to distribute a plurality of permits to utilize computing resources to the plurality of user accounts.

In step 604, the server 102 is programmed or configured to maintain a queue for each user account of one or more user accounts of the plurality of user accounts.

In step 606, the server 102 is programmed or configured to receive a first set of database queries associated with a first user account of the one or more user accounts.

In step 608, the server 102 is programmed or configured to create an execution plan for the first set of database queries that specifies a plurality of portions that correspond to a plurality of subsets of the first set of database queries and that are to be implemented sequentially. In some embodiments, the server 102 is programmed to determine that an unused permit exists for the first user account, and implement a portion of the plurality of portions of the execution plan using the unused permit, leading to the pausing execution of the first set of database queries.

In step 610, the server 102 is programmed or configured to determine pausing execution of the first set of database queries and no computing resource is available.

In step 612, the server 102 is programmed or configured to compute a current priority for each user account of a subset of user accounts of the plurality of user accounts based on an intensity of query execution related to the user account over a period of time. In some embodiments, the intensity of query execution is expressed as an inverse of an amount of time since a last time any set of database queries was executed for the user account or as an inverse of an average amount of time each set of database queries stayed in the queue for the user account.

In other embodiments, the computing is further based on a number of unused permits for the user account or a complexity of a set of database queries to be executed associated with the user account. In other embodiments, the complexity of the set of database queries is related to a type of the set of database queries or an estimated cost of executing the set of database queries.

In step 614, the server 102 is programmed or configured to select a specific user account from the subset of user accounts based on the set of current priorities. In some embodiments, the plurality of user accounts is organized in a hierarchy of nodes, and the selecting comprises iteratively from a top level of the hierarchy down, identifying a node at a current level that is a child of any node identified at a previous level and that has a highest aggregated current priority over user accounts in descendants of the node.

In step 616, the server 102 is programmed or configured to determining that the specific user account is not the first user account.

In step 618, the server 102 is programmed or configured to saving the execution plan and a state of execution for the first set of database queries into the queue for the first user account. In some embodiments, the server 102 is programmed to, in response to the saving, release a computing resource utilized in executing the first set of database queries and a corresponding permit for the first user account.

In step 620, the server 102 is programmed or configured to execute a specific set of database queries associated with the specific user account based on a specific execution plan and a specific state of execution for the specific set of database queries. In some embodiments, the server 102 is programmed to specifically remove a particular set of database queries from the queue for the specific user account.

In some embodiments, the server 102 is programmed to receive a second set of database queries associated with a second user account of the one or more user accounts, and determine that no computing resource is available and no unused permit exists for the second user account. The server 102 is programmed to further determine that a length of time since a set of database queries associated with the second user account was last received exceed a threshold, and save an execution plan for the second set of database queries into the queue for the second user account.

In some embodiments, the server 102 is programmed to receive a third set of database queries associated with a second user account of the one or more user accounts, and determine that execution of the second set of database queries is paused and no computing resource is available. The server 102 is programmed to then compute a current priority for each user account of a second subset of the plurality of user accounts based on an intensity of query execution related to the user account over a second period of time, identify the second user account as having a highest current priority, and cause further execution of the second set of database queries.

### 5. EXAMPLE IMPLEMENTATION

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

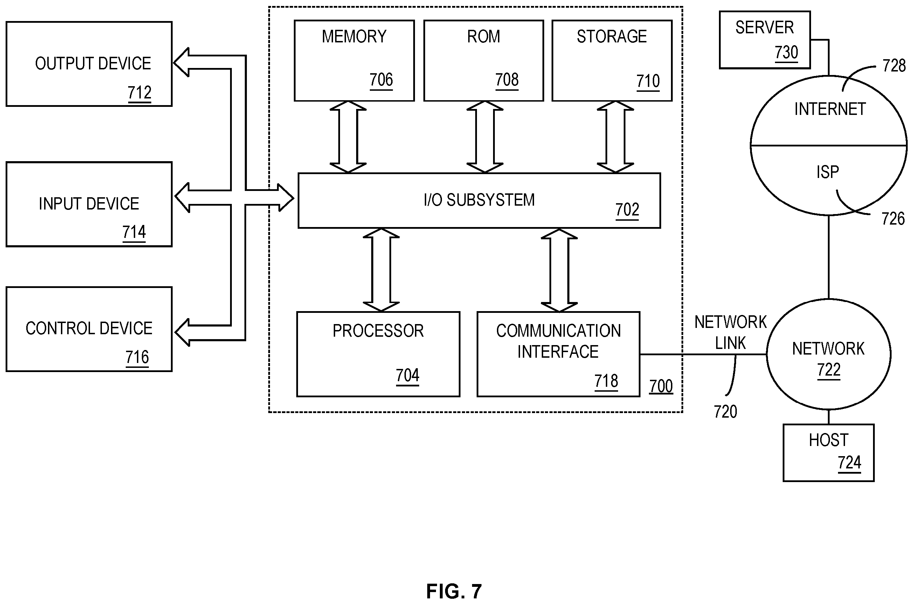

FIG. 7 is a block diagram that illustrates an example computer system with which an embodiment may be implemented. In the example of FIG. 7, a computer system 700 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 700 includes an input/output (I/O) subsystem 702 which may include a bus and/or other communication mechanism(s) for communicating information and/or instructions between the components of the computer system 700 over electronic signal paths. The I/O subsystem 702 may include an I/O controller, a memory controller and at least one I/O port. The electronic signal paths are represented schematically in the drawings, for example as lines, unidirectional arrows, or bidirectional arrows.

At least one hardware processor 704 is coupled to I/O subsystem 702 for processing information and instructions. Hardware processor 704 may include, for example, a general-purpose microprocessor or microcontroller and/or a special-purpose microprocessor such as an embedded system or a graphics processing unit (GPU) or a digital signal processor or Advanced RISC Machines (ARM) processor. Processor 704 may comprise an integrated arithmetic logic unit (ALU) or may be coupled to a separate ALU.

Computer system 700 includes one or more units of memory 706, such as a main memory, which is coupled to I/O subsystem 702 for electronically digitally storing data and instructions to be executed by processor 704. Memory 706 may include volatile memory such as various forms of random-access memory (RAM) or other dynamic storage device. Memory 706 also may be used for storing temporary variables or other intermediate information during execution of instructions to be executed by processor 704. Such instructions, when stored in non-transitory computer-readable storage media accessible to processor 704, can render computer system 700 into a special-purpose machine that is customized to perform the operations specified in the instructions.

Computer system 700 further includes non-volatile memory such as read only memory (ROM) 708 or other static storage device coupled to I/O subsystem 702 for storing information and instructions for processor 704. The ROM 708 may include various forms of programmable ROM (PROM) such as erasable PROM (EPROM) or electrically erasable PROM (EEPROM). A unit of persistent storage 710 may include various forms of non-volatile RAM (NVRAM), such as flash memory, or solid-state storage, magnetic disk, or optical disk such as CD-ROM or DVD-ROM, and may be coupled to I/O subsystem 702 for storing information and instructions. Storage 710 is an example of a non-transitory computer-readable medium that may be used to store instructions and data which when executed by the processor 704 cause performing computer-implemented methods to execute the techniques herein.

The instructions in memory 706, ROM 708 or storage 710 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement Transmission Control Protocol/Internet Protocol (TCP/IP), Hypertext Transfer Protocol (HTTP) or other communication protocols; file processing instructions to interpret and render files coded using HTML, XML, Joint Photographic Experts Group (JPEG), Moving Picture Experts Group (MPEG) or Portable Network Graphics (PNG); user interface instructions to render or interpret commands for a GUI, command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or NoSQL, an object store, a graph database, a flat file system or other data storage.

Computer system 700 may be coupled via I/O subsystem 702 to at least one output device 712. In one embodiment, output device 712 is a digital computer display. Examples of a display that may be used in various embodiments include a touch screen display or a light-emitting diode (LED) display or a liquid crystal display (LCD) or an e-paper display. Computer system 700 may include other type(s) of output devices 712, alternatively or in addition to a display device. Examples of other output devices 712 include printers, ticket printers, plotters, projectors, sound cards or video cards, speakers, buzzers or piezoelectric devices or other audible devices, lamps or LED or LCD indicators, haptic devices, actuators, or servos.

At least one input device 714 is coupled to I/O subsystem 702 for communicating signals, data, command selections or gestures to processor 704. Examples of input devices 714 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 716, which may perform cursor control or other automated control functions such as navigation in a graphical interface on a display screen, alternatively or in addition to input functions. Control device 716 may be a touchpad, a mouse, a trackball, or cursor direction keys for communicating direction information and command selections to processor 704 and for controlling cursor movement on the output device 712. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 714 may include a combination of multiple different input devices, such as a video camera and a depth sensor.

In another embodiment, computer system 700 may comprise an internet of things (IoT) device in which one or more of the output device 712, input device 714, and control device 716 are omitted. Or, in such an embodiment, the input device 714 may comprise one or more cameras, motion detectors, thermometers, microphones, seismic detectors, other sensors or detectors, measurement devices or encoders and the output device 712 may comprise a special-purpose display such as a single-line LED or LCD display, one or more indicators, a display panel, a meter, a valve, a solenoid, an actuator or a servo.

When computer system 700 is a mobile computing device, input device 714 may comprise a global positioning system (GPS) receiver coupled to a GPS module that is capable of triangulating to a plurality of GPS satellites, determining and generating geo-location or position data such as latitude-longitude values for a geophysical location of the computer system 700. Output device 712 may include hardware, software, firmware, and interfaces for generating position reporting packets, notifications, pulse or heartbeat signals, or other recurring data transmissions that specify a position of the computer system 700, alone or in combination with other application-specific data, directed toward host computer 724 or server 730.

Computer system 700 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 700 in response to processor 704 executing at least one sequence of at least one instruction contained in main memory 706. Such instructions may be read into main memory 706 from another storage medium, such as storage 710. Execution of the sequences of instructions contained in main memory 706 causes processor 704 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage 710. Volatile media includes dynamic memory, such as memory 706. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 702. Transmission media can also take the form of acoustic or light waves, such as those generated during radio-wave and infra-red data communications.

Various forms of media may be involved in carrying at least one sequence of at least one instruction to processor 704 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 700 can receive the data on the communication link and convert the data to be read by computer system 700. For instance, a receiver such as a radio frequency antenna or an infrared detector can receive the data carried in a wireless or optical signal and appropriate circuitry can provide the data to I/O subsystem 702 such as place the data on a bus. I/O subsystem 702 carries the data to memory 706, from which processor 704 retrieves and executes the instructions. The instructions received by memory 706 may optionally be stored on storage 710 either before or after execution by processor 704.

Computer system 700 also includes a communication interface 718 coupled to I/O subsystem 702. Communication interface 718 provides a two-way data communication coupling to network link(s) 720 that are directly or indirectly connected to at least one communication network, such as a network 722 or a public or private cloud on the Internet. For example, communication interface 718 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 722 broadly represents a LAN, WAN, campus network, internetwork, or any combination thereof. Communication interface 718 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 718 sends and receives electrical, electromagnetic, or optical signals over signal paths that carry digital data streams representing various types of information.

Network link 720 typically provides electrical, electromagnetic, or optical data communication directly or through at least one network to other data devices, using, for example, satellite, cellular, Wi-Fi, or BLUETOOTH technology. For example, network link 720 may provide a connection through a network 722 to a host computer 724.

Furthermore, network link 720 may provide a connection through network 722 or to other computing devices via internetworking devices and/or computers that are operated by an Internet Service Provider (ISP) 726. ISP 726 provides data communication services through a world-wide packet data communication network represented as internet 728. A server 730 may be coupled to internet 728. Server 730 broadly represents any computer, data center, virtual machine, or virtual computing instance with or without a hypervisor, or computer executing a containerized program system such as DOCKER or KUBERNETES. Server 730 may represent an electronic digital service that is implemented using more than one computer or instance and that is accessed and used by transmitting web services requests, Uniform Resource Locator (URL) strings with parameters in HTTP payloads, API calls, app services calls, or other service calls. Computer system 700 and server 730 may form elements of a distributed computing system that includes other computers, a processing cluster, server farm or other organization of computers that cooperate to perform tasks or execute applications or services. Server 730 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to interpret or render files coded using HTML, XML, JPEG, MPEG or PNG; user interface instructions to render or interpret commands for a GUI, command-line interface or text user interface; application software such as an office suite, internet access applications, design and manufacturing applications, graphics applications, audio applications, software engineering applications, educational applications, games or miscellaneous applications. Server 730 may comprise a web application server that hosts a presentation layer, application layer and data storage layer such as a relational database system using SQL or NoSQL, an object store, a graph database, a flat file system or other data storage.

Computer system 700 can send messages and receive data and instructions, including program code, through the network(s), network link 720 and communication interface 718. In the Internet example, a server 730 might transmit a requested code for an application program through Internet 728, ISP 726, local network 722 and communication interface 718. The received code may be executed by processor 704 as it is received, and/or stored in storage 710, or other non-volatile storage for later execution.

The execution of instructions as described in this section may implement a process in the form of an instance of a computer program that is being executed, and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 704. While each processor 704 or core of the processor executes a single task at a time, computer system 700 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

### 6. EXTENSIONS AND ALTERNATIVES

In the foregoing specification, embodiments of the disclosure have been described with reference to numerous specific details that may vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction.

## Claims

1. A computer-implemented method of managing execution of database queries associated with a plurality of user accounts, comprising:
distributing (602) a plurality of permits to utilize computing resources to the plurality of user accounts;
maintaining (604) a queue for each user account of one or more user accounts of the plurality of user accounts;
receiving (606) a first set of database queries associated with a first user account of the one or more user accounts;
creating (608) an execution plan for the first set of database queries that specifies a plurality of portions that correspond to a plurality of subsets of the first set of database queries and that are to be implemented sequentially;
determining (610) pausing execution of the first set of database queries and no computing resource is available;
computing (612) a current priority for each user account of a subset of user accounts of the plurality of user accounts based on an intensity of query execution related to the user account over a period of time;
selecting (614) a specific user account from the subset of user accounts based on the set of current priorities;
determining (616) that the specific user account is not the first user account;
saving (618) the execution plan and a state of execution for the first set of database queries into the queue for the first user account;
executing (620) a specific set of database queries associated with the specific user account based on a specific execution plan and a specific state of execution for the specific set of database queries,
wherein the method is performed by one or more processors.

2. The computer-implemented method of claim 1,
the creating comprising selecting at least one breakpoint in the execution plan,
each breakpoint separating two portions of the plurality of portions of the execution plan,
an amount of state information to be saved at a breakpoint of the at least one breakpoint being below a threshold.

3. The computer-implemented method of claim 1 or claim 2, further comprising:
determining that an unused permit exists for the first user account;
implementing a portion of the plurality of portions of the execution plan using the unused permit, leading to the pausing execution of the first set of database queries.

4. The computer-implemented method of any preceding claim, further comprising:
receiving a second set of database queries associated with a second user account of the one or more user accounts;
determining that no computing resource is available and no unused permit exists for the second user account;
determining that a length of time since a set of database queries associated with the second user account was last received exceed a threshold;
saving an execution plan for the second set of database queries into the queue for the second user account.

5. The computer-implemented method of any preceding claim, the intensity of query execution being expressed as an inverse of an amount of time since a last time any set of database queries was executed for the user account or as an inverse of an average amount of time each set of database queries stayed in the queue for the user account.

6. The computer-implemented method of any preceding claim, the computing being further based on a number of unused permits for the user account or a complexity of a set of database queries to be executed associated with the user account.

7. The computer-implemented method of claim 6, the complexity of the set of database queries being related to a type of the set of database queries or an estimated cost of executing the set of database queries.

8. The computer-implemented method of any preceding claim,
the plurality of user accounts being organized in a hierarchy of nodes,
the selecting comprising iteratively from a top level of the hierarchy down, identifying a node at a current level that is a child of any node identified at a previous level and that has a highest aggregated current priority over user accounts in descendants of the node.

9. The computer-implemented method of any preceding claim, further comprising:
receiving a second set of database queries associated with a second user account of the one or more user accounts;
determining that execution of the second set of database queries is paused and no computing resource is available;
computing a current priority for each user account of a second subset of the plurality of user accounts based on an intensity of query execution related to the user account over a second period of time;
identifying the second user account as having a highest current priority;
causing further execution of the second set of database queries.

10. The computer-implemented method of any preceding claim, further comprising, in response to the saving, releasing a computing resource utilized in executing the first set of database queries and a corresponding permit for the first user account.

11. The computer-implemented method of any preceding claim, the executing comprising removing a particular set of database queries from the queue for the specific user account.

12. The computer-implemented method of any preceding claim, further comprising:
receiving an ontology query for querying an ontology from the first user account,
the ontology including a definition for each ontology entity type of a plurality of ontology entity types and a plurality of ontology entities instantiated from the plurality of ontology entity types,
each ontology entity type of the plurality of ontology entity types having one or more properties;
identifying a set of permissions for accessing the ontology associated with the first user account;
transforming the ontology query to the first set of database queries;
causing the execution of the first set of database queries based on the set of permissions.

13. A system (700) for managing execution of database queries associated with a plurality of user accounts, comprising:
a memory;
one or more processors (704) coupled to the memory and configured to perform the method of any preceding claim.

14. A non-transitory, computer-readable storage medium storing one or more sequences of instructions which when executed cause one or more processors to perform the method of any one of claims 1 to 12.
